# EUROPEAN PATENT SPECIFICATION

(11) **EP 3 705 936 B1**
(45) Date of publication and mention of the grant of the patent: **11.05.2022**
(21) Application number: 20161322.1
(22) Date of filing: 05.03.2020
(51) Int. Cl.: G02F 1/1362

(54) **DISPLAY DEVICE**
ANZEIGEVORRICHTUNG
DISPOSITIF D'AFFICHAGE

(30) Priority: 07.03.2019 KR 20190026391
(43) Date of publication of application: 09.09.2020
(73) Proprietor: Samsung Display Co., Ltd., Gyeonggi-do 17113 (KR)
(72) Inventor: LEE, Yong Hee, Gyeonggi-do (KR); KIM, Kyung Ho, Gyeonggi-do (KR); LEE, Seong Young, Gyeonggi-do (KR); LEE, Seung Min, Seoul (KR)
(74) Representative: Walaski, Jan Filip

(56) References cited:
- US-A1- 2016 320 676
- US-A1- 2016 320 683

## Description

Exemplary embodiments of the invention relate generally to a display device, and, more specifically, to a liquid crystal display.

A display device, such as a liquid crystal display (LCD) and an organic light diode display, includes a display panel including a plurality of pixels as a unit for displaying an image.

The display panel of the liquid crystal display includes a liquid crystal layer including liquid crystal molecules, a field generating electrode controlling alignment of the liquid crystal molecules of the liquid crystal layer, a plurality of signal lines applying a voltage to at least a portion of the field generating electrode, and a plurality of switching elements connected thereto. If the voltage is applied to the field generating electrode, an electric field is generated to the liquid crystal layer to arrange the liquid crystal molecules, such that a desired image may be displayed by controlling an amount of transmitted light. To control the amount of transmitted light, the display panel may include at least one polarizer.

The field generating electrode included in the liquid crystal display includes a pixel electrode applied with the data voltage and an opposed electrode applied with a common voltage. The pixel electrode may be applied with the data voltage through a switching element, which may be a thin film transistor.

The above information disclosed in this Background section is only for understanding of the background of the inventive concepts, and, therefore, it may contain information that does not constitute prior art.
US 2016/0320676 discloses a liquid crystal display.
US 2016/0320683 discloses a liquid crystal display.

According to an aspect of the invention, there is provided a display device as set out in claim 1.

A display device constructed according to exemplary embodiments of the invention is capable of reducing a light leakage phenomenon and may be repaired with reduced light leakage.

A display device according to exemplary embodiments also provides a high aperture ratio and transmittance.

Additional features of the inventive concepts will be set forth in the description which follows, and in part will be apparent from the description, or may be learned by practice of the inventive concepts.

A display device according to an exemplary embodiment includes a substrate, a gate line disposed on the substrate and transmitting a gate signal, a first reference voltage line separated from the gate line and transmitting a reference voltage, a data line insulated from and crossing the gate line and the first reference voltage line, a first drain electrode separated from the data line, an insulating layer disposed on the data line and the first drain electrode, and a pixel electrode layer disposed on the insulating layer, in which the pixel electrode layer includes a pixel electrode and a light blocking electrode overlapping the data line, the pixel electrode includes a first sub-pixel electrode including a first extension part protruded toward the first drain electrode and a contact portion connected to one end of the first extension part, the first extension part of the first sub-pixel electrode has a first side parallel to a first side of the light blocking electrode, and an interval between the first sides of the first extension part and the light blocking electrode is less than about 4 µm.

The first extension part may include a first portion and a second portion, the first portion may include the first side extending in a first direction parallel to the first side of the light blocking electrode, and the second portion may extend from one end of the first portion in a second direction intersecting the first direction and is bent in the first direction to be connected to the contact portion.

The first portion may include a first part extending from one edge of the first sub-pixel electrode in a third direction oblique to the first direction, the first part being parallel to a portion of a side of the light blocking electrode and connected to the first side.

The first portion and the second portion may be connected to each other, and the first direction may cross the second direction.

The first sub-pixel electrode may further include a second extension part, and the second extension part may have a second side opposing the first side of the first extension part, the second side of the second extension part may be parallel to a second side of another light blocking electrode adjacent to the light blocking electrode.

An interval between the second sides of the second extension part and the adjacent other light blocking electrode may be less than about 4 µm.

The first extension part may be connected to a first edge of the first sub-pixel electrode, and the second extension part may be connected to a second edge of the first sub-pixel electrode.

The second extension part may have a first part protruding from the second edge of the first sub-pixel electrode, the first part being parallel to the first direction, a second part connected to the first part and extending in the second direction, and a third part connected to the second part and comprising the second side of the second extension part.

The gate line may include a first gate electrode, a second gate electrode, and a third gate electrode, a first transistor may include the first gate electrode, a first source electrode, and a first drain electrode, a second transistor may include the second gate electrode, a second source electrode, and a second drain electrode, a third transistor may include the third gate electrode, a third source electrode, and a third drain electrode, the pixel electrode may further include a second sub-pixel electrode, and the insulating layer may include a first contact hole disposed on the first drain electrode, a second contact hole disposed on the second drain electrode, and a third contact hole disposed on the third drain electrode, the first sub-pixel electrode may be electrically connected to the first drain electrode through the first contact hole, the second sub-pixel electrode may be electrically connected to the second drain electrode through the second contact hole, and the first contact hole, the second contact hole, and the third contact hole may be disposed on the same side with respect to the gate line.

The display device may further include a connecting member electrically connecting the first reference voltage line and the third drain electrode through the third contact hole may be further included.

The connecting member may further include a protrusion protruded toward the second extension part.

One side of the protrusion of the connecting member may be parallel to one side of the second extension part.

The interval between sides of the protrusion and the second extension part facing each other may be less than about 4 µm.

The protrusion may include a first part having a first width and a second part having a second width less than the first width.

The display device may further include a second reference voltage line disposed on the gate line and the first reference voltage line, in which the second reference voltage line may be electrically connected to the first reference voltage line, include the third drain electrode, and disposed on the same conductive layer as the third drain electrode.

One second reference voltage line may be disposed in three adjacent pixels.

Each of the first drain electrode, the second drain electrode, the protrusion of the data line, and a connection portion between the first extension part and the first sub-pixel electrode may be cut.

The first sub-pixel electrode may further include a cutting position guide part for showing a cut position at the connection portion of the first extension part and the first sub-pixel electrode.

The first extension part of the first sub-pixel electrode may be configured to be cut when the protrusion of the date line is cut.

The display device may further include a color filter disposed on the substrate, a facing substrate facing the substrate and including a light blocking member and a common electrode, and a liquid crystal layer disposed between the substrate and the facing substrate.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the inventive concepts.
FIG. 1 is an equivalent circuit diagram of one pixel of a display device according to an exemplary embodiment.
FIG. 2 is a layout view of a part of one pixel of a display device according to an exemplary embodiment.
FIG. 3 is a cross-sectional view taken along line IIIa-IIIb of the display device of FIG. 2.
FIG. 4 is a cross-sectional view taken along line IVa-IVb of the display device of FIG. 2.
FIG. 5 is a view exemplarily illustrating a pixel electrode layer in the display device of FIG. 2.
FIG. 6 is a layout view of a part of one pixel of a display device according to another exemplary embodiment.
FIG. 7 is a view exemplarily illustrating a pixel electrode layer in the display device of FIG. 6.
FIG. 8 is a negative of a photograph illustrating a portion where light is leaked in the display device of FIG. 6.
FIG. 9 is a plan layout view for a display area of a display device according to an exemplary embodiment.
FIG. 10 is a layout view of three pixels of a display device according to an exemplary embodiment.
FIG. 11 is a layout view of a color filter and a longitudinal reference voltage line of three pixels of a display device according to an exemplary embodiment.
FIG. 12 is a view showing a disconnection position for repairing a pixel in the display device of FIG. 6.

### DETAILED DESCRIPTION

In the following description, for the purposes of explanation, numerous specific details are set forth in order to provide a thorough understanding of various exemplary embodiments or implementations of the invention. As used herein "embodiments" and "implementations" are interchangeable words that are non-limiting examples of devices or methods employing one or more of the inventive concepts disclosed herein. It is apparent, however, that various exemplary embodiments may be practiced without these specific details or with one or more equivalent arrangements. In other instances, well-known structures and devices are shown in block diagram form in order to avoid unnecessarily obscuring various exemplary embodiments. Further, various exemplary embodiments may be different, but do not have to be exclusive. For example, specific shapes, configurations, and characteristics of an exemplary embodiment may be used or implemented in another exemplary embodiment without departing from the inventive concepts.

Unless otherwise specified, the illustrated exemplary embodiments are to be understood as providing exemplary features of varying detail of some ways in which the inventive concepts may be implemented in practice. Therefore, unless otherwise specified, the features, components, modules, layers, films, panels, regions, and/or aspects, etc. (hereinafter individually or collectively referred to as "elements"), of the various embodiments may be otherwise combined, separated, interchanged, and/or rearranged without departing from the inventive concepts.

The use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified. Further, in the accompanying drawings, the size and relative sizes of elements may be exaggerated for clarity and/or descriptive purposes. When an exemplary embodiment may be implemented differently, a specific process order may be performed differently from the described order. For example, two consecutively described processes may be performed substantially at the same time or performed in an order opposite to the described order. Also, like reference numerals denote like elements.

When an element, such as a layer, is referred to as being "on," "connected to," or "coupled to" another element or layer, it may be directly on, connected to, or coupled to the other element or layer or intervening elements or layers may be present. When, however, an element or layer is referred to as being "directly on," "directly connected to," or "directly coupled to" another element or layer, there are no intervening elements or layers present. To this end, the term "connected" may refer to physical, electrical, and/or fluid connection, with or without intervening elements. Further, the D1-axis, the D2-axis, and the D3-axis are not limited to three axes of a rectangular coordinate system, such as the x, y, and z - axes, and may be interpreted in a broader sense. For example, the D1-axis, the D2-axis, and the D3-axis may be perpendicular to one another, or may represent different directions that are not perpendicular to one another. For the purposes of this disclosure, "at least one of X, Y, and Z" and "at least one selected from the group consisting of X, Y, and Z" may be construed as X only, Y only, Z only, or any combination of two or more of X, Y, and Z, such as, for instance, XYZ, XYY, YZ, and ZZ. As used herein, the term "and/or" includes any and all combinations of one or more of the associated listed items.

Although the terms "first," "second," etc. may be used herein to describe various types of elements, these elements should not be limited by these terms. These terms are used to distinguish one element from another element. Thus, a first element discussed below could be termed a second element without departing from the teachings of the disclosure.

Spatially relative terms, such as "beneath," "below," "under," "lower," "above," "upper," "over," "higher," "side" (e.g., as in "sidewall"), and the like, may be used herein for descriptive purposes, and, thereby, to describe one elements relationship to another element(s) as illustrated in the drawings. Spatially relative terms are intended to encompass different orientations of an apparatus in use, operation, and/or manufacture in addition to the orientation depicted in the drawings. For example, if the apparatus in the drawings is turned over, elements described as "below" or "beneath" other elements or features would then be oriented "above" the other elements or features. Thus, the exemplary term "below" can encompass both an orientation of above and below. Furthermore, the apparatus may be otherwise oriented (e.g., rotated 90 degrees or at other orientations), and, as such, the spatially relative descriptors used herein interpreted accordingly.

The terminology used herein is for the purpose of describing particular embodiments and is not intended to be limiting. As used herein, the singular forms, "a," "an," and "the" are intended to include the plural forms as well, unless the context clearly indicates otherwise. Moreover, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. It is also noted that, as used herein, the terms "substantially," "about," and other similar terms, are used as terms of approximation and not as terms of degree, and, as such, are utilized to account for inherent deviations in measured, calculated, and/or provided values that would be recognized by one of ordinary skill in the art.

Various exemplary embodiments are described herein with reference to sectional and/or exploded illustrations that are schematic illustrations of idealized exemplary embodiments and/or intermediate structures. As such, variations from the shapes of the illustrations as a result, for example, of manufacturing techniques and/or tolerances, are to be expected. Thus, exemplary embodiments disclosed herein should not necessarily be construed as limited to the particular illustrated shapes of regions, but are to include deviations in shapes that result from, for instance, manufacturing. In this manner, regions illustrated in the drawings may be schematic in nature and the shapes of these regions may not reflect actual shapes of regions of a device and, as such, are not necessarily intended to be limiting.

Unless otherwise defined, all terms (including technical and scientific terms) used herein have the same meaning as commonly understood by one of ordinary skill in the art to which this disclosure is a part. Terms, such as those defined in commonly used dictionaries, should be interpreted as having a meaning that is consistent with their meaning in the context of the relevant art and should not be interpreted in an idealized or overly formal sense, unless expressly so defined herein.

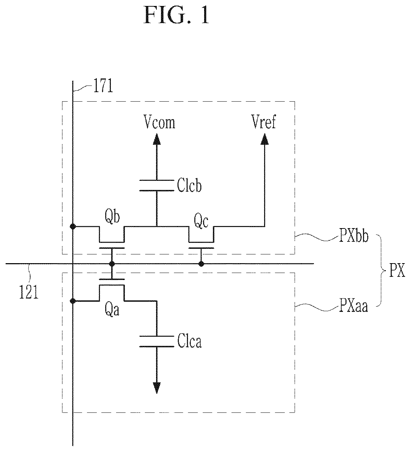

Hereinafter, a display device according to an exemplary embodiment will be described with reference to FIG. 1.

FIG. 1 is an equivalent circuit diagram of one pixel PX of a display device according to an exemplary embodiment.

A display device according to an exemplary embodiment includes a plurality of pixels PX as a unit capable of displaying an image. Referring to FIG. 1, one pixel PX may include a first sub-pixel PXaa and a second sub-pixel PXbb. The first sub-pixel PXaa includes a first transistor Qa connected to one data line 171 and one gate line 121, and a first liquid crystal capacitor Clca connected to the first transistor Qa. The second sub-pixel PXbb includes a second transistor Qb connected to the same data line 171 and gate line 121 as the first transistor Qa, a third transistor Qc connected to the same gate line 121 as the second transistor Qb, and a second liquid crystal capacitor Clcb connected to the second transistor Qb and the third transistor Qc.

The first transistor Qa includes a gate electrode connected to the gate line 121, a source electrode connected to the data line 171, and a drain electrode connected to the first liquid crystal capacitor Clca. The first transistor Qa is controlled depending on a gate signal transmitted by the gate line 121, such that a data voltage transmitted by the data line 171 is transmitted to an electrode of the first liquid crystal capacitor Clca.

The second transistor Qb includes a gate electrode connected to the same gate line 121 as the first transistor Qa, a source electrode connected to the same data line 171 as the first transistor Qa, and a drain electrode connected to the second liquid crystal capacitor Clcb and the source electrode of the third transistor Qc.

The third transistor Qc includes a gate electrode connected to the same gate line 121 as the first transistor Qa and the second transistor Qb, a source electrode connected to the drain electrode of the second transistor Qb, and a drain electrode to which a reference voltage Vref is applied.

The second transistor Qb and the third transistor Qc are controlled depending on the gate signal transmitted by the gate line 121, and if the third transistor Qc and the second transistor Qb are turned on, the voltage having a divided value between the data voltage transmitted through the data line 171 and the reference voltage Vref is transmitted to an electrode of the second liquid crystal capacitor Clcb. The reference voltage Vref may be a predetermined constant voltage, for example.

The first sub-pixel PXaa and the second sub-pixel PXbb may display an image according to different gamma curves for one input image signal. The gamma curve means a curve which shows a change of luminance or transmittance for a gray of the input image signal. The gamma curve provided by the display device corresponds to the gamma curve provided by one pixel PX, and the gamma curve provided by one pixel PX corresponds to a sum of the gamma curves provided by two sub-pixels PXaa and PXbb.

The gamma curve on which the second sub-pixel PXbb depends may be controlled by controlling a resistance ratio of the third transistor Qc and the second transistor Qb, the reference voltage Vref, etc. As the charge voltage of the second liquid crystal capacitor Clcb is controlled through the control of the third transistor Qc, the reference voltage Vref, and the like, the luminance of two sub-pixels PXaa and PXbb may be varied, and if the voltage charged to the first liquid crystal capacitor Clca and the second liquid crystal capacitor Clcb is appropriately controlled, lateral visibility of the display device may be improved.

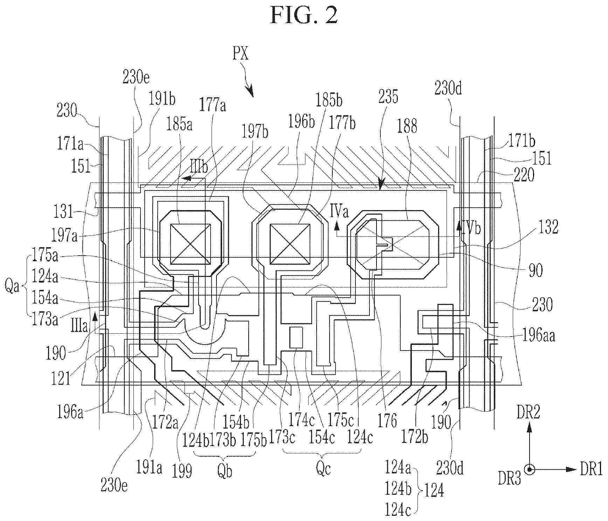

The detailed structure of the pixel PX of the display device according to an exemplary embodiment will further be described with reference to FIG. 2 to FIG. 4 along with FIG. 1.

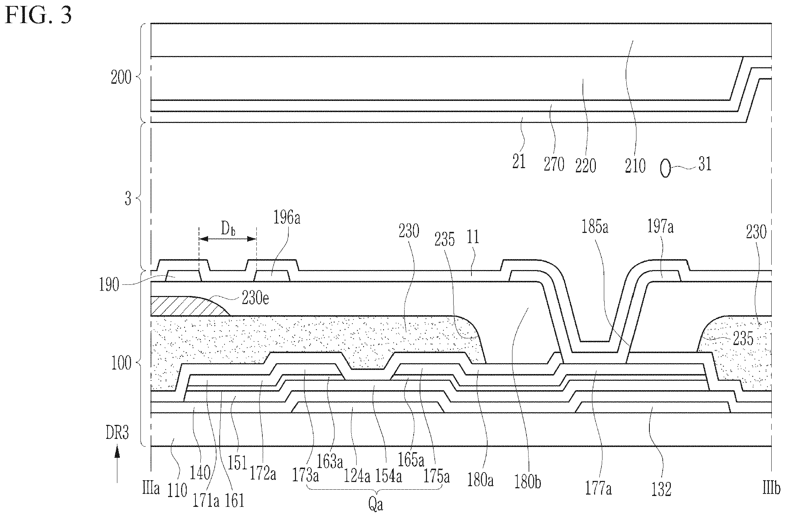

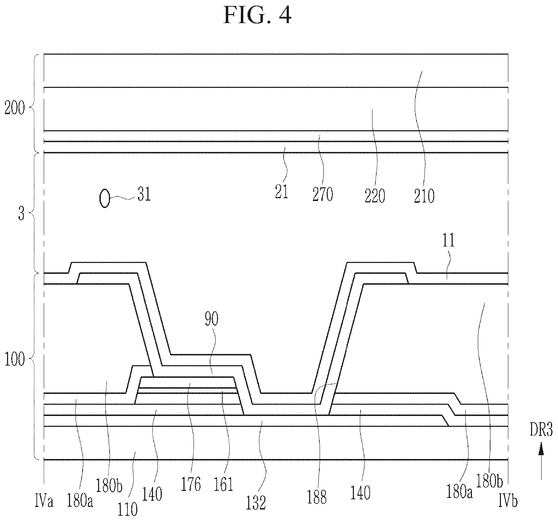

FIG. 2 is a layout view of a part of one pixel of a display device according to an exemplary embodiment, FIG. 3 is a cross-sectional view taken along line IIIa-IIIb of the display device of FIG. 2, and FIG. 4 is a cross-sectional view taken along line IVa-IVb of the display device of FIG. 2.

The display device according to an exemplary embodiment may be a liquid crystal display, which may include a first display panel 100, a second display panel 200, and a liquid crystal layer 3 located between two display panels 100 and 200.

In the first display panel 100, a gate conductive layer including a plurality of gate lines 121 and a reference voltage line 131 (hereinafter referred to as "a first reference voltage line") are disposed on an insulating substrate 110.

The gate line 121 transmits a gate signal, mainly extends in a first direction DR1, and includes an extension portion 124. The extension portion 124 of the gate line 121 includes a first gate electrode 124a, a second gate electrode 124b, and a third gate electrode 124c, which are connected to each other. The second gate electrode 124b may be disposed between the first gate electrode 124a and the third gate electrode 124c.

The extension portion 124 may have a shape that is extended or protruded in a second direction DR2 from a portion of the gate line 121 extending in parallel to the first direction DR1.

The reference voltage line 131 transmits the reference voltage Vref, is separated from the gate line 121, and extends substantially parallel to the gate line 121. The reference voltage line 131 includes an extension portion 132 having a shape that is extended or protruded in the opposite direction to the second direction DR2 from a portion of the reference voltage line 131 extending in parallel to the first direction DR1. More particularly, the direction in which the extension portion 124 is protruded from the gate line 121 and the direction in which the extension portion 132 is protruded from the reference voltage line 131 may be opposite to each other. In other words, the extension portion 124 of the gate line 121 and the extension portion 132 of the reference voltage line 131 may face each other and be disposed between the portion of the gate line 121 extending in the first direction DR1 and the portion of the reference voltage line 131 extending in the first direction DR1.

A gate insulating layer 140 may be disposed on the gate conductive layer and the exposed substrate 110. The gate insulating layer 140 may include an inorganic insulating material, such as a silicon nitride (SiNₓ), a silicon oxide (SiOₓ), and a silicon oxynitride.

A semiconductor layer 151 including a first semiconductor 154a, a second semiconductor 154b, and a third semiconductor 154c is disposed in the gate insulating layer 140. The first semiconductor 154a is disposed on the first gate electrode 124a to overlap the first gate electrode 124a, the second semiconductor 154b is disposed on the second gate electrode 124b to overlap the second gate electrode 124b, and the third semiconductor 154c is disposed on the third gate electrode 124c to overlap the third gate electrode 124c. The first semiconductor 154a, the second semiconductor 154b, and the third semiconductor 154c may be connected to each other, and the second semiconductor 154b may be disposed between the first semiconductor 154a and the third semiconductor 154c.

The semiconductor layer 151 may include an amorphous silicon, a polycrystalline silicon, or an oxide semiconductor including a metal oxide.

An ohmic contact layer 161 including a plurality of ohmic contact layers 163a and 165a may be disposed on the semiconductor layer 151, and the ohmic contact layer 161 may not be formed on at least a partial region of the semiconductor layer 151.

A data conductive layer is disposed on the ohmic contact layer 161. The data conductive layer includes a plurality of data lines 171a and 171b, a first source electrode 173a, a second source electrode 173b, a third source electrode 173c, a first drain electrode 175a, a second drain electrode 175b, and a third drain electrode 175c.

According to an exemplary embodiment, the first source electrode 173a and the second source electrode 173b are connected to each other and are connected to one data line 171a. However, the inventive concepts are not limited thereto. For example, in some exemplary embodiments, the first source electrode 173a and the second source electrode 173b may be connected to a different data line 171b in the pixels PX adjacent upward and downward. More particularly, the first source electrode 173a and the second source electrode 173b may be protruded from one of two data lines 171a and 171b.

The first drain electrode 175a faces the first source electrode 173a, and includes one end portion enclosed by the first source electrode 173a and an extension portion 177a disposed at the other side.

The second drain electrode 175b faces the second source electrode 173b, and includes one end portion extending parallel to the second source electrode 173b and an extension portion 177b disposed at the other side.

The third source electrode 173c may be disposed on at least a portion of the second drain electrode 175b. More particularly, the third source electrode 173c may be a portion of the second drain electrode 175b that opposes a portion of the second drain electrode 175b that faces the second source electrode 173b.

The third drain electrode 175c may include one end portion facing the third source electrode 173c and the other end portion 176. The third drain electrode 175c may extend from one end portion facing the third source electrode 173c, which is then bent in the second direction DR2 to be extended in the first direction DR1, and then bent again in the second direction DR2 to be extended to the other end portion 176. The end portion 176 of the third drain electrode 175c is electrically connected to the extension portion 132 of the reference voltage line 131, thereby receiving the reference voltage Vref.

The data conductive layer may further include an auxiliary electrode 174c disposed between the third source electrode 173c and the third drain electrode 175c. The auxiliary electrode 174c may be formed as an island type that overlaps the third semiconductor 154c and the third gate electrode 124c. A width or length of the channel of the third transistor Qc may be controlled by the auxiliary electrode 174c.

The extension portion 177a of the first drain electrode 175a, the extension portion 177b of the second drain electrode 175b, and the end portion 176 of the third drain electrode 175c are disposed on the side of the second direction DR2 based on the gate line 121. For example, as shown in FIG. 2, the extension portion 177a of the first drain electrode 175a, the extension portion 177b of the second drain electrode 175b, and the end portion 176 of the third drain electrode 175c may disposed on the upper side based on the gate line 121, and are sequentially arranged from the left side in the first direction DR1.

At least part of each of the extension portion 177a, the extension portion 177b, and the third drain electrode 175c may overlap the extension portion 132 of the reference voltage line 131.

The data lines 171a and 171b may mainly extend in the second direction DR2 and respectively transmit the data voltage. The data lines 171a and 171b may include a first protrusion 172a protruded in the first direction DR1 and a second protrusion 172b protruded in the opposite direction of the first direction DR1, respectively. More particularly, the data lines 171a and 171b may include a first protrusion 172a and a second protrusion 172b protruded in opposite directions to each other. Referring to one pixel PX, the left data line 171a includes the first protrusion 172a protruded toward the right data line 171b, and the data line 171b includes the second protrusion 172b protruded toward the left data line 171a. In FIG. 2, the first source electrode 173a is connected to the data line 171a through the first protrusion 172a. However, in the vertically adjacent pixels, the first source electrode 173a may be connected to the data line 171b through the second protrusion 172b. In this case, the first transistor Qa may be disposed on the rightmost side, and the second transistor Qb and the third transistor Qc may be sequentially arranged on the left side thereof to be arranged in the opposite direction to the first direction DR1.

The first protrusion 172a and the second protrusion 172b, as shown in FIG. 2, are not aligned in the first direction DR1, but may be slightly shifted. Alternatively, the first protrusion 172a and the second protrusion 172b may be disposed to correspond to and be aligned with each other in the first direction DR1.

The gate conductive layer and the data conductive layer may include at least one metal, such as copper (Cu), aluminum (Al), magnesium (Mg), silver (Ag), gold (Au), platinum (Pt), palladium (Pd), nickel (Ni), neodymium (Nd), iridium (Ir), molybdenum (Mo), tungsten (W), titanium (Ti), chromium (Cr), tantalum (Ta), and alloys thereof. The gate conductive layer and the data conductive layer may be formed as a single layer or as a multilayer of two or more layers formed of a plurality of materials.

The planar shape of the data conductive layer and the ohmic contact layer 161 may be substantially the same. In the portions between the first source electrode 173a and the first drain electrode 175a, between the second source electrode 173b and the second drain electrode 175b, between the third source electrode 173c and the auxiliary electrode 174c, and between the auxiliary electrode 174c and the third drain electrode 175c, the planar shape of the data conductive layer and the semiconductor layer 151 may be substantially the same. As shown in FIG. 2, the planar area of the semiconductor layer 151 may be slightly smaller than the planar area of the data conductive layer.

The first gate electrode 124a, the first source electrode 173a, and the first drain electrode 175a form the first transistor Qa together with the first semiconductor 154a. The second gate electrode 124b, the second source electrode 173b, and the second drain electrode 175b form the second transistor Qb together with the second semiconductor 154b. The third gate electrode 124c, the third source electrode 173c, the auxiliary electrode 174c, and the third drain electrode 175c form the third transistor Qc together with the third semiconductor 154c.

The channels of the first transistor Qa, the second transistor Qb, and the third transistor Qc may be formed in the first, second, and third semiconductors 154a, 154b, and 154c between the first, second, and third source electrodes 173a, 173b, and 173c, and the first, second, and third drain electrodes 175a, 175b, and 175c, respectively. The auxiliary electrode 174c may be formed to elongate the channel length of the third transistor Qc. In some exemplary embodiments, the auxiliary electrode 174c may be omitted.

The first transistor Qa, the second transistor Qb, and the third transistor Qc overlap the extension portion 124 of the gate line 121, and maybe arranged in the first direction DR1. For example, as shown in FIG. 2, the first transistor Qa, the second transistor Qb, and the third transistor Qc may be sequentially arranged in the first direction DR1.

A first insulating layer 180a is disposed on the data conductive layer, the exposed semiconductors 154a, 154b, and 154c, and the gate insulating layer 140. The first insulating layer 180a may include the organic insulating material or the inorganic insulating material.

A color filter layer including a plurality of color filters 230, 23od, and 230e may be disposed on the first insulating layer 180a. The color filters 230, 230d, and 230e may display one of primary colors, such as three primary colors of red, green, and blue, or four primary colors, etc. The color filters of one group representing the different primary colors may be repeatedly disposed in the first direction DR1.

At least adjacent two color filters 230, 230d, and 230e may be overlapped on the data lines 171a and 171b. The color filters 230, 230d, and 230e that are overlapped with each other may prevent light leakage near the data lines 171a and 171b disposed in an adjacent pixel.

According to another exemplary embodiment, the color filters 230, 230d, and 230e may not be included in the first display panel 100, but may be included in the second display panel 200.

A second insulating layer 180b may be disposed on the color filters 230, 230d, and 230e. The second insulating layer 180b may include the inorganic insulating material or the organic insulating material, including a generally organic insulating material, to provide a substantially flat surface. The second insulating layer 180b may function as an overcoat for the color filters 230, 230d and 230e to prevent the color filters 230, 230d and 230e from being exposed and an impurity such as the pigment from permeating into the liquid crystal layer 3.

The first insulating layer 180a and the second insulating layer 180b may include a contact hole 185a formed on the extension portion 177a of the first drain electrode 175a, a contact hole 185b formed on the extension portion 177b of the second drain electrode 175b, and a contact hole 188 formed on the end portion 176 of the third drain electrode 175c and the part of the extension portion 132 of the reference voltage line 131 adjacent thereto.

As shown in FIG. 2, the contact holes 185a, 185b, and 188 may be formed on the same side based on the gate line 121, for example, the upper side (the second direction DR2 side). The contact hole 185a, the contact hole 185b, and the contact hole 188 may be sequentially arranged in the first direction DR1 from the left side.

In each pixel PX, since an interval between the three contact holes 185a, 185b, and 188 arranged in one line in the first direction DR1 and an interval between the contact hole 185a or the contact hole 188 adjacent to the data lines 171a and 171b and the data lines 171a and 171b are not sufficient, when forming openings respectively corresponding to the contact holes 185a, 185b, and 188 in the color filters 230, 230d, and 230e, the thickness of the color filters 230, 230d, and 230e remaining between the contact holes 185a, 185b, and 188, or the color filters 230, 23od, and 23oe remaining between the data lines 171a and 171b and the contact hole 185a or the contact hole 188 may be formed thin. In this case, the color filters 230, 230d, and 230e, which are left with insufficient thickness, may be separated (or delaminated) and cause display defects.

According to an exemplary embodiment, the openings 235 may be formed by removing the color filters 230, 230d, and 230e corresponding to at least three contact holes 185a, 185b, and 188, to prevent or at least suppress the color filters 230, 230d, and 230e from being delaminated.

In a plan view, the opening 235 may overlap a light blocking member 220 to be described later. More specifically, the opening 235, as shown in FIG. 2, may not overlap the transistors Qa, Qb, and Qc and the second gate electrode 124b, or in some exemplary embodiments, the opening 235 may overlap some of the transistors Qa, Qb, and Qc and the second gate electrode 124b.

Referring to FIG. 2, each color filter 230, 230d, and 230e corresponding to one pixel column may have a plurality of openings 235. Each opening 235 is located in a region overlapping three contact holes 185a, 185b, and 188, and one opening 235 may be formed for each pixel PX. However, according to another exemplary implementation, the opening 235 may extend in the first direction DR1 and intersect the plurality of data lines 171a and 171b without being limited to one pixel PX being elongated in the first direction DR1 over the plurality of pixels PX.

The width of the second direction DR2 of the opening 235 may be less than about half of the width of the light blocking member 220 of the second direction DR2. For example, when the width of the light blocking member 220 of the second direction DR2 is about 40 µm to about 70 µm, the width of the opening 235 of the second direction DR2 may be about 20 µm to about 35 µm.

A pixel electrode layer including a pixel electrode having a plurality of first sub-pixel electrodes 191a and a plurality of second sub-pixel electrodes 191b, a shielding electrode 190, and a connecting member 90 may be disposed on the second insulating layer 180b.

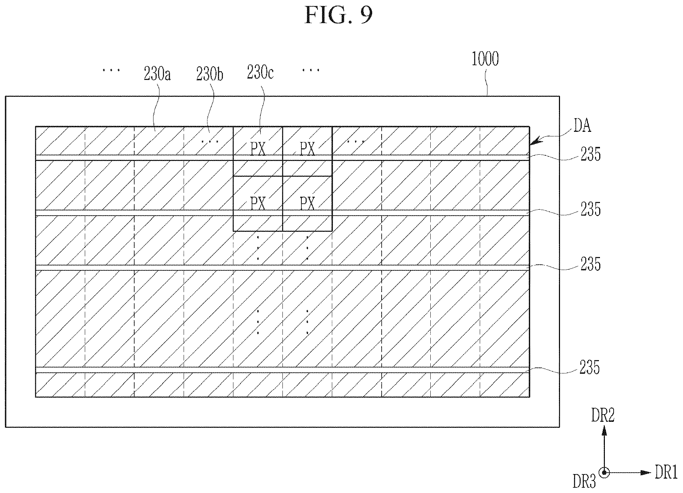

For each pixel PX, the first sub-pixel electrode 191a is disposed on one side and the second sub-pixel electrode 191b is disposed on the other side based on the region where the gate line 121, the reference voltage line 131, and the transistors Qa, Qb, and Qc are disposed. In FIG. 2, the first sub-pixel electrode 191a may be disposed below the gate line 121, and the second sub-pixel electrode 191b may be disposed above the gate line 121 according to an exemplary embodiment. The detailed shape of the first sub-pixel electrode 191a and the second sub-pixel electrode 191b will be described below with reference to FIG. 9.

The first sub-pixel electrode 191a includes an extension part 196a protruded toward the extension portion 177a of the first drain electrode 175a and a contact portion 197a connected to the end of the extension part 196a, and the second sub-pixel electrode 191b includes an extension part 196b protruded toward the extension portion 177b of the second drain electrode 175b and a contact portion 197b connected to the end of the extension part 196b. The contact portion 197a is electrically connected to the extension portion 177a of the first drain electrode 175a through the contact hole 185a, and the contact portion 197b is electrically connected to the extension portion 177b of the second drain electrode 175b through the contact hole 185b.

The connecting member 90 is in contact with the end portion 176 of the first drain electrode 175c and a portion of the extension portion 132 of the reference voltage line 131 adjacent thereto through a contact hole 188 to be electrically connected. Thus, the end portion 176 of the first drain electrode 175c is electrically connected to the extension portion 132 of the reference voltage line 131 via the connecting member 90, thereby receiving the reference voltage Vref. In this manner, the third drain electrode 175c of the third transistor Qc may be connected to the reference voltage Vref.

The shielding electrode 190 is generally extended in the second direction DR2 and may be disposed between two adjacent pixel PXs. The shielding electrode 190 overlaps the data lines 171a and 171b to shield the data lines 171a and 171b from an electric field, and reduces capacitive coupling between the data lines 171a and 171b and the first and second sub-pixel electrodes 191a and 191b.

The first sub-pixel electrode 191a is further formed with a cutting position guide part 199 for guiding a cutting position. The cutting position guide part 199 may be protruded from the first sub-pixel electrode 191a and guides the position to be cut by laser when repair is needed.

The pixel electrode layer may include a transparent conductive material, such as indium-tin oxide (ITO), indium-zinc oxide (IZO), a metal thin film, etc.

An alignment layer 11 may be disposed on the pixel electrode layer and the second insulating layer 180b. The alignment layer 11 may be a vertical alignment layer. The alignment layer 11 may be rubbed in at least one direction, or may be an optical alignment layer including a photo-reactive material.

In the second display panel 200, the light blocking member 220 may be disposed on an insulating substrate 210 (hereinafter referred to as a "facing substrate"). Referring to FIGS. 3 and 4, the light blocking member 220 may be disposed below the substrate 210 according to an exemplary embodiment. As shown in FIG. 2, the light blocking member 220 includes a portion extending in the first direction DR1 on a plane, and may overlap the extension portion 124 of the gate line 121, the extension portion 132 of the reference voltage line 131, the transistors Qa, Qb, and Qc, the extension portion 177a of the first drain electrode 175a, the extension portion 177b of the second drain electrode 175b, and the end portion 176 of the third drain electrode 175c. That is, the light blocking member 220 may transverse and extend between the first sub-pixel electrode 191a and the second sub-pixel electrode 191b, and may overlap the gate line 121 and the reference voltage line 131.

According to another exemplary embodiment, the light blocking member 220 may be disposed on the first display panel 100, rather than in the second display panel 200.

A common electrode 270 may be disposed on the light blocking member 220. Referring to FIGS. 3 and 4, the common electrode 270 may be disposed below the light blocking member 220 according to an exemplary embodiment. The common electrode 270 may be formed as a plate on substantially the entire surface of the substrate 210. More particularly, the common electrode 270 may not include a portion that is removed, such as a slit. The common electrode 270 receives a common voltage Vcom having a constant voltage value.

The reference voltage Vref transmitted by the reference voltage line 131 may be the same as the common voltage Vcom or may be difference from the common voltage Vcom. When there is a difference, the reference voltage Vref may have a potential of about -2 V or about 2 V from the common voltage Vcom.

The common electrode 270 may include the transparent conductive material, such as ITO, IZO, or the metal thin film.

An alignment layer 21 may be disposed on the common electrode 270. Referring to FIGS. 3 and 4, the alignment layer 21 may be disposed below the common electrode 270. The alignment layer 21 may be the vertical alignment layer. The alignment layer 21 may be rubbed in at least one direction, or may be an optical alignment layer containing a photo-reactive material.

The liquid crystal layer 3 includes a plurality of liquid crystal molecules 31. The liquid crystal molecules may have negative dielectric anisotropy, and may be aligned to be arranged substantially perpendicular to the substrates 110 and 210 when no electric field is generated in the liquid crystal layer 3. In some exemplary embodiments, the liquid crystal molecules may be pretilted in a predetermined direction when no electric field is generated in the liquid crystal layer 3.

The first sub-pixel electrode 191a forms the first liquid crystal capacitor Clca along with the common electrode 270 and the liquid crystal layer 3 interposed therebetween. The second sub-pixel electrode 191b forms the second liquid crystal capacitor Clcb along with the common electrode 270 and the liquid crystal layer 3 interposed therebetween.

A plurality of spacers may be disposed between the first display panel 100 and the second display panel 200. The spacers may be disposed to overlap the transistors Qa, Qb, and Qc in a plan view. When the pixel electrode layer overlaps the spacer, the pixel electrode layer may be cracked. As such, the pixel electrode layer may not overlap the spacer. Accordingly, the extension part 196a (hereinafter referred to as a "first extension part") and the extension part 196aa (hereinafter referred to as a "second extension part") of the first sub-pixel electrode 191a may be protruded and disposed at the place adjacent to the data lines 171a and 171b, at the right and left edges of the first sub-pixel electrode 191a.

According to an exemplary embodiment, the contact hole 185a, the contact hole 185b, and the contact hole 188 of one pixel PX are disposed on the same side with respect to the gate line 121, and are arranged side by side in the first direction DR1. Accordingly, as compared with a case when the contact holes 185a, 185b, and 188 are dispersed and disposed upward and downward based on the gate line 121, the space occupied by the contact holes may be reduced, such that the width of the light blocking member 220 of the second direction DR2 may be further decreased, thereby increasing the aperture ratio and the transmittance of the pixel PX.

Also, in the pixel PX according to an exemplary embodiment, since the contact holes 185a, 185b, and 188 are disposed on the same side based on the gate line 121, one of the extension part 196a of the first sub-pixel electrode 191a and the extension part 196b of the second sub-pixel electrode 191b intersect the first protrusion 172a of the data lines 171a and 171b. As shown in FIG. 2, since the contact holes 185a, 185b, and 188 are disposed upward based on the gate line 121, the extension part 196a of the first sub-pixel electrode 191a that is disposed downward crosses the first protrusion 172a of the data line 171a. In this case, a stain from vertical crosstalk may be visible due to the parasitic capacitance between the first sub-pixel electrode 191a and the data line 171a. However, according to an exemplary embodiment, since the second extension part 196aa disposed on the opposite side of the extension part 196a of the first sub-pixel electrode 191a crosses the data line 171b adjacent to the data line 171a to form the additional parasitic capacitance, the vertical crosstalk between the first sub-pixel electrode 191a and the data line 171a may be compensated.

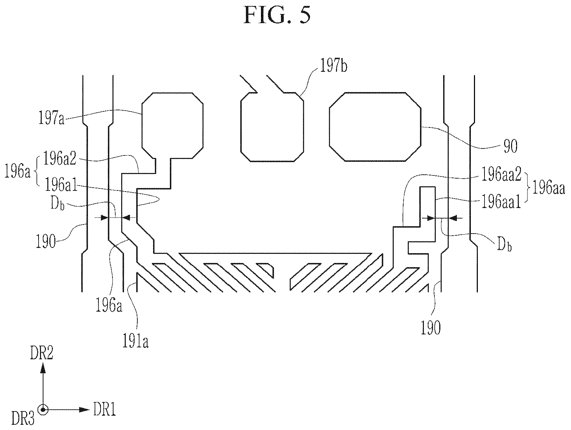

According to an exemplary embodiment, the interval between the extension part 196a of the first sub-pixel electrode 191a and the light blocking electrode 190 may be formed less than a predetermined interval, such as about 4 µm to reduce the leakage of light. As such, the extension part 196a of the first sub-pixel electrode 191a is formed with the predetermined interval (Db of FIG. 3) from the light blocking electrode 190, and the structures that are parallel to each other with the predetermined interval Db are formed in at least one or more portions, which will be described in detail with reference to FIG. 5.

FIG. 5 is a view exemplarily illustrating a pixel electrode layer of the display device of FIG. 2.

The extension part 196a of the first sub-pixel electrode 191a has the structure that is protruded in the second direction DR2 to be parallel to one side of the shielding electrode 190 in the upper-left edge portion of the first sub-pixel electrode 191a. The extension part 196a then is bent and extends in an oblique direction. The extension part 196a is then bent again in the second direction DR2 to be parallel to one side of the shielding electrode 190. The extension part 196a is then bent and extends in the first direction DRi,and then is again bent in the second direction DR2 to be connected to the contact portion 197a. Hereinafter, a portion of the extension part 196a having the predetermined interval from the shielding electrode 190 while being protruded from the first sub-pixel electrode 191a and extending in the second direction DR2 is referred to as a first portion 196a1, and a portion of the extension part 196a connected to the contact portion 197a while being bent in the first direction DR1 to be disposed away from the light blocking electrode 190 is referred to as a second portion 196a2.

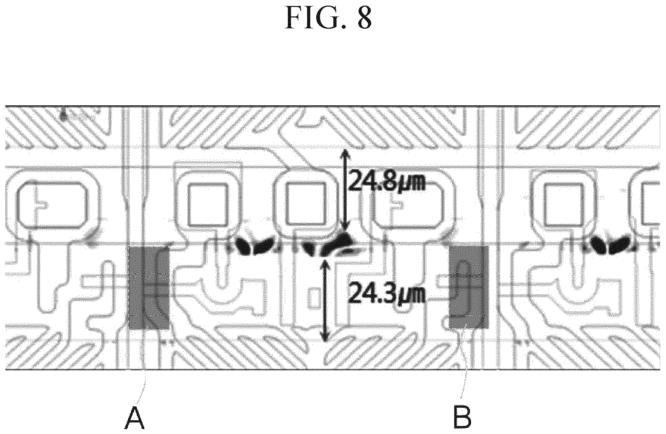

The first portion 196a1 of the extension part 196a is parallel to one side of the light blocking electrode 190 and has the predetermined interval Db therebewteen. According to an exemplary embodiment, the predetermined interval Db is less than about 4 µm to prevent the leakage of light between the shielding electrode 190 and the first portion 196a1 of the extension part 196a. If the distance between the shielding electrode 190 and the first portion 196a1 of the extension part 196a exceeds about 4 µm, light leakage may occur, which will be described in more detail below with reference to FIG. 8.

The first portion 196a1 of the extension part 196a has the extending structure while intersecting the first protrusion 172a of the data line 171a.

The first portion 196a1 and the second portion 196a2 of the extension part 196a are basically characterized by being perpendicular to one another. The liquid crystal molecules 31 of the liquid crystal layer 3 may be arranged along the step generated by to the extension part 196a. As such, due to the structure of the first and second portions of the extension part 196a, the arrangement direction of the liquid crystal molecules 31 may be aligned to correspond to a direction to which the liquid crystal molecules 31 are arranged on the first and second sub-pixel electrodes 191a and 191b. This will be described in more detail below.

The second insulating layer 180b, which may be formed relatively thick to have the planarization characteristic, is disposed under the pixel electrode layer including the extension part 196a. As such, the thickness of the data conductive layer or the gate conductive layer may not affect the liquid crystal layer 3. However, since only the alignment layer 11 is disposed on the pixel electrode layer above the second insulating layer 180b, the step due to the thickness of the pixel electrode layer may affect the arrangement of the liquid crystal molecules 31 of the liquid crystal layer 3. In this case, if the extension part 196a does not have the structure that is bent perpendicularly as in the illustrated exemplary embodiment, but rather extends in the diagonal direction, the direction to which the liquid crystal molecules 31 are arranged around the extension part 196a may be different from the direction in which the liquid crystal molecules 31 are pre-tilted on the first and second sub-pixel electrode 191a and 191b and the direction in which the liquid crystal molecules 31 are arranged, thereby causing a portion where the liquid crystal molecules 31 are misaligned. Such portion of the liquid crystal molecules 31 may not have the desired arrangement and cause the light leakage phenomenon.

However, when the extension part 196a is formed to have the structure that is bent perpendicularly as in the illustrated exemplary embodiment, the arrangement direction of the liquid crystal molecules 31 is aligned to correspond to the direction of the liquid crystal molecules 31 above the first and second sub-pixel electrodes 191a and 191b, thereby preventing the occurrence of the light leakage phenomenon.

Since the extension part 196a is the portion shielded by the light blocking member 220 when the display device is manufactured correctly, even if the light leakage occurs in the corresponding portion, such would not affect the display quality. However, it may be difficult to precisely align the light blocking member 220 with respect to all of the pixels, especially when the display device has a high resolution with smaller sized pixels and greater number of pixels. As such, the light leakage may occur even with a slight deviation of the light blocking member 220.

According to the illustrated exemplary embodiment, the light leakage may not be generated around the extension part 196a due to the structure of the extension part 196a, which includes a first portion 196a1 that is parallel to the light blocking electrode 190 with the predetermined interval (about 4 µm or less) and a second portion 196a2 that is perpendicular to the first portion 196a1. In this manner, even if the light blocking member 220 is deviated slightly, the light leakage may not occur.

According to another exemplary embodiment, the extension part 196a may include only one of the first and second portions, because the light leakage phenomenon may be reduced even with only one of the first and second portions of the extension part 196a.

The first sub-pixel electrode 191a of FIG. 5 includes another extension part 196aa (hereinafter referred to as a "second extension part") corresponding to the extension part 196a (hereinafter referred to as a "first extension part") and disposed at the other side. The second extension part 196aa has a structure similar to that of the first extension part 196a, which will be described in more detail below.

The second extension part 196aa includes a third portion 196aa1 that is parallel to one side of the light blocking electrode 190 with a constant interval (Db: about 4 µm or less).

The second extension part 196aa of the first sub-pixel electrode 191a has one end that protrudes in the second direction DR2 from the upper right edge portion of the first sub-pixel electrode 191a to be parallel to one side of the light blocking electrode 190, which is then bent and extends in the first direction DR1, and which is then bent again in the second direction DR2. The end formed in the second direction DR2 at the second extension part 196aa is formed with the interval Db of about 4 µm or less to one side of the light blocking electrode 190 while being parallel to the one side of the shielding electrode 190. If the distance between the light blocking electrode 190 and the first portion 196a1 of the extension part 196a exceeds about 4 µm, the light leakage may occur, which will be described in more detail with reference to FIG. 8.

FIG. 5 shows that the second extension part 196aa is not parallel to the light blocking electrode 190 until it reaches the end, or has the interval of about 4 µm or more, however, the inventive concepts are not limited thereto. For example, in some exemplary embodiments, the second extension part 196aa may be formed to have the structure that is parallel to one end of the shielding electrode 190 as in the first extension part 196a.

Due to the structure of the second extension part 196aa according to the illustrated exemplary embodiment, the light leakage may be decreased at the periphery of the second extension part 196aa, or at least at the end portion of the second extension part 196aa.

In addition, the second extension part 196aa may include a fourth portion 196aa2 bent at right angles.

The second extension part 196aa includes only portions extending in the first direction DR1 and the second direction DR2. As such, in the periphery of the second extension part 196aa, since the liquid crystal molecules 31 are arranged to correspond to the direction of the liquid crystal molecules 31 on the first and second sub-pixel electrodes 191a and 191b, the light leakage may not be generated as in the first extension part 196a.

Also, referring to FIG. 5, the left and right end sides of the first sub-pixel electrode 191a are spaced apart by about 4 µm or less from the light blocking electrode 190, thereby reducing the light leakage in the corresponding portion. Similarly, in the second sub-pixel electrode 191b, the left and right end sides are spaced apart by about 4 µm or less from the shielding electrode 190, thereby reducing the light leakage.

The structure of the second extension part 196aa extends while intersecting the second protrusion 172b of the data line 171b.

According to another exemplary embodiment, the second extension part 196aa may have only one of the third and fourth portions. According to still another exemplary embodiment, the first extension part 196a may have only one of the first and second portions, and the second extension part 196aa may not include the third and fourth portions. However, in some exemplary embodiments, first extension part 196a may include both of the first and second portions, and the second extension part196aa may include both of the third and fourth portions to effectively prevent the occurrence of light leakage.

In the exemplary embodiments described above with reference to FIG. 2 to FIG. 5, the connecting member 90 has a structure corresponding to the structure of the contact hole 188.

Hereinafter, the connecting member 90 including an additional protrusion 91 will be described according to an exemplary embodiment.

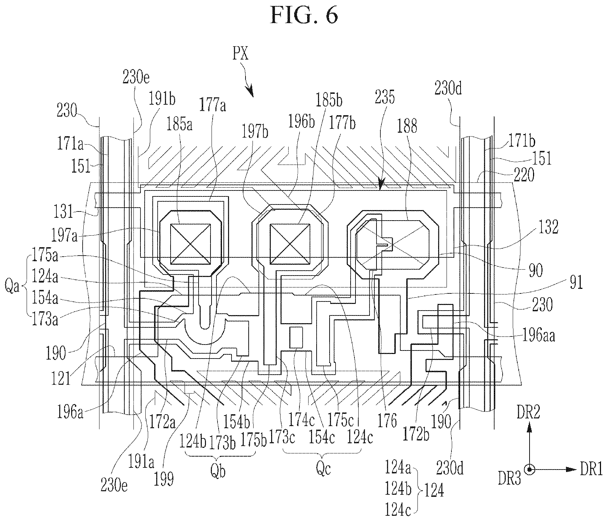

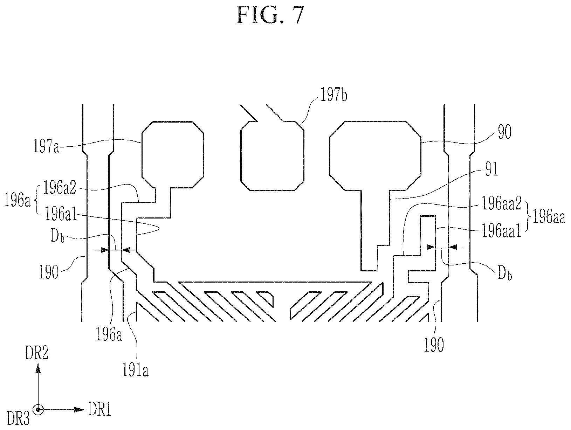

FIG. 6 is a layout view of a part of one pixel of a display device according to another exemplary embodiment, and FIG. 7 is a view exemplary showing a pixel electrode layer of the display device of FIG. 6.

FIG. 6 corresponds to FIG. 2, and FIG. 7 corresponds to FIG. 5. As such, detailed descriptions of the substantially the same elements will be omitted to avoid redundancy.

In the pixel shown in FIG. 6 and FIG. 7 according to an exemplary embodiment, the connecting member 90 includes a first portion corresponding to the contact hole 188 and a second portion 91 (hereinafter referred to as a "protrusion") protruded downward from the first portion of the connecting member 90. The second portion 91 extends to one side of the second extension portion 196aa, and the sides of the second portion 91 and the second extension portion 196aa facing each other are parallel to each other. According to an exemplary embodiment, the interval between the sides of the second portion 91 and the second extension portion 196aa facing each other may be constant and may be less than about 4 µm. In addition, the second portion 91 has a portion with a reduced width near where the second extension part 196aa is bent, thereby having the sides parallel to the sides of the second extension part 196aa facing each other.

Due to the second portion 91 of the connecting member 90, the light leakage that would otherwise be generated at the left of the second extension part 196aa may be prevented.

FIG. 8 shows a result of an experiment on a degree of the light leakage in the pixel PX of FIG. 6 according to an exemplary embodiment.

FIG. 8 is a negative of a photograph of a portion where light is leaked in the pixel of FIG. 6.

FIG. 8 is photographed in a state when the light blocking member 220 is removed to capture the leakage of light (shown as dark portions). In addition, in FIG. 8, the pixel of FIG. 6 is additionally indicated with a line in order to confirm a portion where light leaks. In FIG. 8, the portion A is disposed between the first extension part 196a and the light blocking electrode 190, and the portion B is disposed between the second extension part 196aa and the light blocking electrode 190.

As shown in the portions A and B of FIG. 8, it may be confirmed that the light leakage is not generated between the first extension part 196a and the light blocking electrode 190 (the portion A) and between the second extension part 196aa and the shielding electrode 190 (the portion B). Since these portions are also applied to the pixel shown in FIG. 2 to FIG. 5, the light leakage is also reduced in the pixel of FIG. 2 to FIG. 5.

As the connecting member 90 shown in FIG. 6 further includes the second portion 91, the light leakage that may otherwise be generated at the left of the second extension part 196aa is removed, and this may be confirmed in FIG. 8. That is, referring to FIG. 8, the portions near the lower side of the contact portion 197a of the first sub-pixel electrode 191a and the lower side of the contact portion 197b of the second sub-pixel electrode 191b appear dark, which show the leakage of light. However, since the connecting member 90 according to an exemplary embodiment includes the second portion 91 on the lower side thereof, it may be confirmed that the light leakage is blocked. More particularly, when the sides of the second portion 91 and the second extension portion 196aa that face each other have the parallel structure with the constant interval (about 4 µm or less), the light leakage is removed even between the second portion 91 and the second extension portion 196aa.

As such, even if the light blocking member 220 is misaligned up and down to some extent, the deterioration of the display quality due to the light leakage is reduced, and a margin for compensating the misalignment of the light blocking member 220 is shown in FIG. 8.

That is, if the degree of the misalignment of the light blocking member 220 in the second direction DR2 is less than about 24.3 µm, the light leakage may be masked and the display quality may not be deteriorated. Also, if the degree of the misalignment of the light blocking member 220 in the opposite direction of the second direction DR2 is within about 24.8 µm, the light leakage may be masked and the display quality may not be deteriorated.

In general, the degree of misalignment of the light blocking member 220 in a high-resolution display device is within about 15 µm, and a standard requires that the margin to be less than about 15 µm. As such, the pixel of FIG. 6 according to an exemplary embodiment has a sufficient margin for the misalignment of the light blocking member 220, and thus, deterioration of the display quality (typically a contrast ratio (CR)) due to the leakage of light may be prevented.

In the pixel of FIG. 2 to FIG. 6, as compared with that of FIG. 6, the margin for the misalignment of the light blocking member 220 may be reduced, however the light leakage in the portions A and B of FIG. 8 is removed, such that the margin may be about 15 µm or more.

In the above, the structure of one pixel and its corresponding light leakage were described. Hereinafter, the structure of the display device according to an exemplary embodiment will be described.

FIG. 9 is a layout view of a display device according to an exemplary embodiment.

A display device 1000 according to an exemplary embodiment may include a display area DA capable of displaying an image. A display area may include a plurality of pixels PX arranged in a matrix form.

A plurality of color filters 230a, 230b, and 230c, which may represent different primary colors, are alternately arranged in the first direction DR1. The color filters 230, 230d, and 230e described in FIG. 2 may correspond to the plurality of color filters 230a, 230b, and 230c, respectively.

The opening 235 formed in the plurality of color filters 230a, 230b, and 230c may be extended continuously in the first direction DR1 in the display area DA. Referring back to FIGS. 2 and 6, according to an exemplary embodiment, the opening 235 may be formed only in one color filter, such that the opening 235 is not connected with that in the adjacent color filter. According to the illustrated exemplary embodiment, a plurality of such openings 235 may be arranged in the second direction DR2. As such, throughout the display area, the color filter 230a, 230b, and 230c are arranged in the second direction DR2. The color filters 230a, 230b, and 230c corresponding to each pixel column may be positioned at the upper and lower sides based on the opening 235. The pitch between the plurality of openings 235 in the second direction DR2 may be the same as or similar to the pitch of the plurality of gate lines 121 in the second direction DR2.

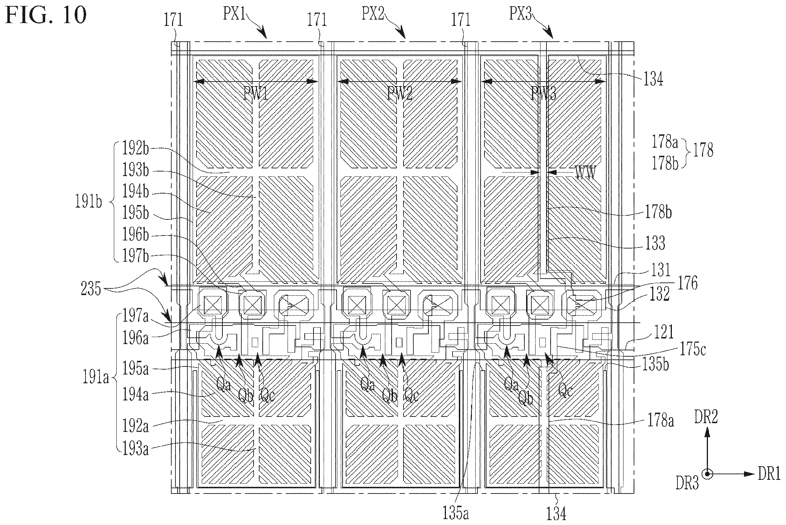

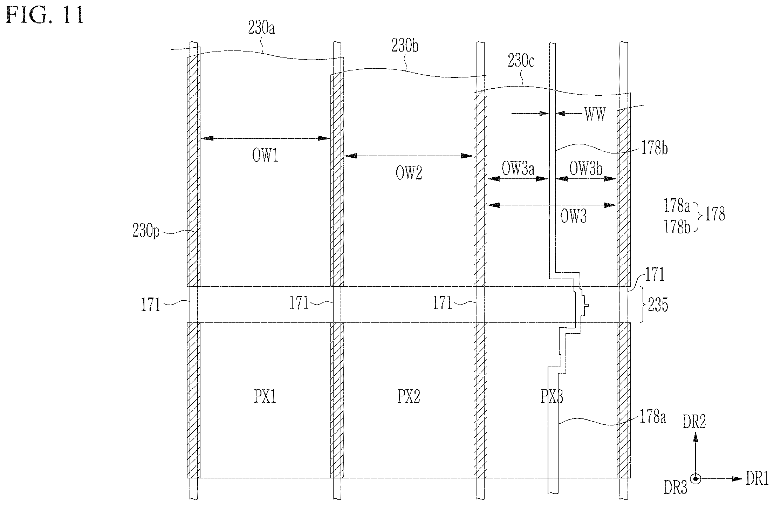

In the above, the arrangement structure of the pixel PX based on the color filter has been described with reference to FIG. 9. Hereinafter, the detailed structure of the display device 1000 will be described with reference to FIG. 10 and FIG. 11.

FIG. 10 is a layout view of three pixels of a display device according to an exemplary embodiment, and FIG. 11 is a layout view of a color filter and a longitudinal reference voltage line of three pixels of a display device according to an exemplary embodiment.

Among the structures of each pixel PX of FIG. 10, the structure of the pixel electrodes (the first sub-pixel electrode 191a and the second sub-pixel electrode 191b), which have not been described in FIG. 2 and FIG. 6, is described below.

The overall shape of the first sub-pixel electrode 191a and the second sub-pixel electrode 191b disposed at each pixel PX1, PX2, and PX3 may be a quadrangle.

The first sub-pixel electrode 191a may include a cross-shaped stem part including a transverse stem part 192a and a longitudinal stem part 193a, a plurality of branch parts 194a extending outside from the cross-shaped stem part, an edge part 195a defining an outer side, and the above-described extension part 196a and contact portion 197a. According to an exemplary embodiment, the first sub-pixel electrode 191a may further include a cutting position guide part 199 for guiding the cutting position at the time of the repairing.

The second sub-pixel electrode 191b may include a cross-shaped stem part including a transverse stem part 192b and a longitudinal stem part 193b, a plurality of branch parts 194b extending outside from the cross-shaped stem part, an edge part 195b defining the outer side, and the above-described extension part 196b and contact portion 197b.

The planar area of the first sub-pixel electrode 191a may be smaller than the planar area of the second sub-pixel electrode 191b.

The primary color of the color filter 230 corresponding to the pixel column in which the pixel PX1 is disposed, the primary color of the color filter 230 corresponding to the pixel column in which the pixel PX2 is disposed, and the primary color of the color filter 230 corresponding to the pixel column in which the pixel PX3 is disposed may be different from each other. For example, the pixel PX1 may correspond to a red color filter, the pixel PX2 may correspond to a green color filter, and the pixel PX3 may correspond to a blue color filter.

In FIG. 2 and FIG. 6, a wiring structure connected to the reference voltage line 131 has not been described, which will be described in detail with reference to FIG. 10 and FIG. 11 below.

Referring to FIG. 10, the reference voltage line 131 may further include a longitudinal part 133 extending in the second direction DR2, a transverse part 134 connected to the longitudinal part 133, and longitudinal parts 135a and 135b connected to the transverse part 134, disposed at right and left sides of the first sub-pixel electrode 191a, and extending in the second direction DR2 as well as the portion extending in the first direction DR1, in which the extension portion 132 is disposed. The transverse part 134 may be disposed to correspond to the boundary of two adjacent pixels in the second direction DR2.

The longitudinal part 133 is not disposed in all of the pixels PX1, PX2, and PX3, but may be disposed at some pixel PX3. For example, the longitudinal part 133 may be extended to overlap the longitudinal stem part 193b of the second sub-pixel electrode 191b of the pixel PX3. The longitudinal parts 135a and 135b may be disposed in all three pixels PX1, PX2, and PX3.

Referring to FIG. 11, in the display device according to an exemplary embodiment, the structure of at least one pixel PX3 among the adjacent pixels PX1, PX2, and PX3 may be different from the remaining pixels PX1 and PX2. In particular, the data conductive layer may further include a longitudinal reference voltage line 178 (also referred to as a "second reference voltage line") overlapping the pixel PX3.

The longitudinal reference voltage line 178 serves to transmit the reference voltage Vref in the vertical direction. The longitudinal reference voltage line 178 may include a longitudinal part 178a overlapping and crossing the first sub-pixel electrode 191a of at least one pixel PX3 among a plurality of pixels PX1, PX2, and PX3, and a longitudinal part 178b overlapping and crossing the second sub-pixel electrode 191b. The longitudinal parts 178a and 178b of the longitudinal reference voltage line 178 may be substantially elongated and extend in the second direction DR2.

The longitudinal reference voltage line 178 may include a third drain electrode 175c. In particular, the end portion 176 of the first drain electrode 175c maybe further extended upward to be connected to the longitudinal portion 178b of the longitudinal reference voltage line 178, and the lower end portion of the first drain electrode 175c may extend further downward to be connected to the longitudinal portion 178a of the longitudinal reference voltage line 178. The longitudinal reference voltage line 178, including the first drain electrode 175c, is electrically connected to the reference voltage line 131 through the contact hole 188. Accordingly, as the reference voltage Vref is transmitted through the reference voltage line 131 in the first direction DR1 and is transmitted through the longitudinal reference voltage line 178 in the second direction DR2, the resistance of the wiring that transmits the reference voltage Vref may be reduced. As such, the voltage drop of the reference voltage Vref may be reduced and the occurrence of planar horizontal crosstalk may be prevented.

The longitudinal part 178a of the longitudinal reference voltage line 178 may overlap and extend with the longitudinal stem part 193a of the first sub-pixel electrode 191a of the pixel PX3, and the longitudinal part 178b may overlap and extend with the longitudinal stem part 193b of the second sub- pixel electrode 191b of the pixel PX3.

The longitudinal reference voltage line 178 is spaced apart from the neighboring data line 171, and may not intersect the data line 171.

Since the longitudinal reference voltage line 178 corresponds only to some pixel PX3, the pitch of the longitudinal reference voltage line 178 in the first direction DR1 may be greater than the pitch of the pixels PX1, PX2, and PX3. More specifically, the pitch of the longitudinal reference voltage line 178 in the first direction DR1 may be approximately three times or more than the pitch of the pixels PX1, PX2, and PX3 in the first direction DR1 (or the pitch of the first and second sub-pixel electrodes 191a and 191b in the first direction DRi).

The width PW3 of the pixel electrode in the first direction DR1 (the first sub-pixel electrode 191a or the second sub-pixel electrode 191b) disposed at some pixels PX3 among the plurality of pixels PX1, PX2, and PX3 may be greater than the widths PW1 and PW2 of the pixel electrode in the first direction DR1 (the first sub-pixel electrode 191a or the second sub-pixel electrode 191b) at the remaining pixels PX1 and PX2. For example, the difference between the width PW3 of the pixel electrode in the first direction DR1 disposed at the pixel PX3 and the width PW1 and PW2 of the pixel electrode in the first direction DR1 disposed at the pixel PX1 and PX2 is substantially equal or similar to the width WW of the longitudinal reference voltage line 178 in the first direction DR1. As such, the area of the effective aperture region, which is the region through which light may pass through the pixel PX3 overlapping the longitudinal reference voltage line 178, may be similar to the area of the effective aperture region of the pixels PX1 and PX2 that do not overlap the longitudinal reference voltage line 178.

For example, when the width WW of the longitudinal reference voltage line 178 in the first direction DR1 is about 3 µm and the width PW1 and PW2 of the pixel electrode in the first direction DR1 disposed at the pixel PX1 and PX2 is about 104 µm , the width PW3 of the pixel electrode in the first direction DR1 disposed at the pixel PX3 may be about 107 µm.

As such, by increasing the width of the pixel electrode of the pixel PX3 in the first direction DR1 by considering the aperture ratio reduced by the longitudinal reference voltage line 178 across the pixel PX₃, the overall aperture ratio and transmittance of the pixel PX3 may be substantially the same as the overall aperture ratio and transmittance of the remaining pixels PX1 and PX2. In this manner, even if the longitudinal reference voltage line 178 overlapping the pixels PX3 among the plurality of pixels PX1, PX2, and PX3 is added, the defects on the color expression of some pixels PX3 from relatively low aperture ratio and transmittance may be prevented.

In the illustrated exemplary embodiment, the distance between two adjacent data lines 171 disposed on either side of the pixel PX3 may be greater than the distance between two adjacent data lines 171 disposed on both sides of the remaining pixels PX1 and PX2. In addition, the area of the first and second sub-pixel electrodes 191a and 191b included in the pixel PX3 may be larger than the area of the first and second sub-pixel electrodes 191a and 191b included in the other pixels PX1 and PX2.

Referring to FIG. 11 along with FIG. 10, at least two adjacent color filters 230a, 230b, and 230c among the plurality of color filters 230a, 230b, and 230c are overlapped with each other to form an overlapping part 230p at where the data lines 171a and 171b overlap.

If the effective aperture region of each pixel PX1, PX2, and PX3 is defined as the region between two neighboring overlapping parts 230p, the effective aperture region of the pixel PX3 among the plurality of pixels PX1, PX2, and PX3 may be the same as or similar to the sum of the width OW3a of the left portion and the width OW3b of the right portion obtained by subtracting the width WW of the longitudinal reference voltage line 178 in the first direction DR1 from the width OW3 between two adjacent overlapping parts 230p in the first direction DR1. The width of the effective aperture region of the pixel PX3 in the first direction DRimay be similar to the widths OW1 and OW2 of the effective aperture region of the pixels PX1 and PX2 in the first direction DR1, respectively.

The pixel PX3 through the longitudinal reference voltage line 178 may be a pixel representing blue, without being limited thereto, and the longitudinal reference voltage line 178 may intersect a pixel representing red or a pixel representing green. In addition, the number of the pixels PX3 through the longitudinal reference voltage line 178 among the plurality of pixels PX1, PX2, and PX3 of one repeated group may be one or two, without being limited thereto.

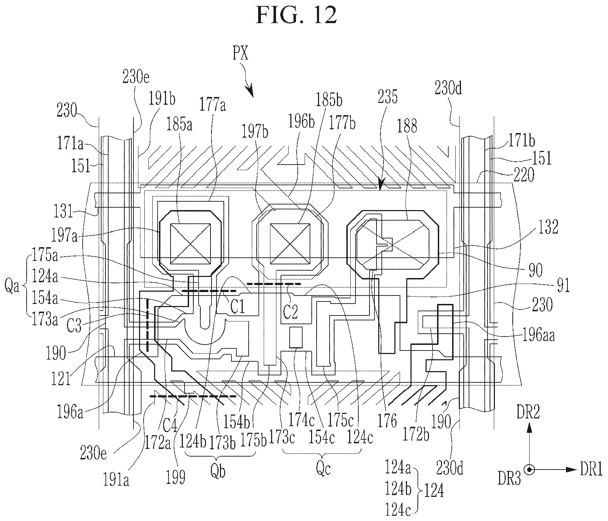

Next, a disconnection position during a repair will be described with reference to FIG. 12 according to an exemplary embodiment.

FIG. 12 is a view showing a disconnection position in the pixel of FIG. 6.

FIG. 12 corresponds to FIG. 6, and shows a cutting position of four cutting parts C1, C2, C3, and C4.

According to an exemplary embodiment, a process of cutting four positions for repairing is performed to the pixel of FIG. 2 or FIG. 6. The laser cutting cuts the wiring of the corresponding position by irradiating a laser through the rear side of the substrate 110.

Referring to FIG. 12, the first cutting part C1 shows the position where the first drain electrode 175a is cut. In this case, even if an output occurs in the first transistor Q1, no voltage is applied to the first sub-pixel electrode 191a due to the cutting of the first drain electrode 175a.

The second cutting part C2 shows the position where the second drain electrode 175b is cut. In this case, even if an output is generated in the second transistor Q2, no voltage is applied to the second sub-pixel electrode 191b due to the cutting of the second drain electrode 175b.

The third cutting part C3 shows the position where the first protrusion 172a of the data line 171a is cut. In this case, the data line 171a is electrically disconnected from the first transistor Q1 and the second transistor Q2, due to the cutting of the first protrusion 172a. That is, the data voltage is not transferred to the first transistor Q1 and the second transistor Q2. However, when cutting the third cutting part C3, the first extension part 196a is also cut, which may cause a short between metals melted by the laser. In this case, the data voltage may be directly transmitted to the first sub-pixel electrode 191a.

The fourth cutting part C4 is cut to prevent such problem. The fourth cutting part C4 shows the position where the first sub-pixel electrode 191a is cut. The cutting position at the first sub-pixel electrode 191a is near the cutting position guide part 199, and the portion connected to the first extension part 196a at the first sub-pixel electrode 191a is cut. As such, even if the first extension part 196a is shorted with the first protrusion 172a of the data line 171a when cutting the third cutting part C3, the data voltage may not be applied to the first sub-pixel electrode 191a.

As such, the data voltage is not transferred to the first sub-pixel electrode 191a and the second sub-pixel electrode 191b of the pixel where the repair process is performed. As such, the repaired pixel PX displays the normal state, and is displayed as black in the display device 1000 manufacture as normally black.

In a high resolution display device 1000, such as 4K, 8K, etc., since the number of pixels is very large, even if some pixels are defective, the device may be sold without being processed as defective. Also, if the defective pixel PX is repaired as a black, an image may be displayed with a pixel without a color, however, such may not prevent the usage of a device as it cannot be easily be recognized by a user.

FIG. 12 shows the cutting part position when the first transistor Q1 and the second transistor Q2 are connected to the left-disposed data line 171a. When the right data line 171b, and the first transistor Q1 and the second transistor Q2, are connected to each other, cutting parts may be positioned at symmetrical positions of the cutting part shown in FIG. 12. In general, it may be difficult for a repairer to determine cutting positions of various display devices. As such, a cutting position guide part 199 according to an exemplary embodiment may be provided to indicate the cutting position.

According to exemplary embodiments, a display device constructed according to the principles of the invention may reduce a light leakage phenomenon. Also, if a defect is generated in the display device, the display device may be repaired through the repairing process. In addition, a display device according to exemplary embodiments has an increased aperture ratio and transmittance.

Although certain exemplary embodiments and implementations have been described herein, other embodiments and modifications will be apparent from this description. Accordingly, the inventive concepts are not limited to such embodiments, but rather to the broader scope of the appended claims.

## Claims

1. A display device comprising:
a substrate (110);
a gate line (121) disposed on the substrate (110) for transmitting a gate signal;
a first reference voltage line (131) separated from the gate line (121) for transmitting a reference voltage;
a data line (171) insulated from and crossing the gate line (121) and the first reference voltage line (131);
a first drain electrode (175a) separated from the data line (171);
an insulating layer (180a) disposed on the data line (171) and the first drain electrode (175a); and
a pixel electrode layer disposed on the insulating layer (180a), wherein:
the pixel electrode layer includes a pixel electrode (191a, 191b) and a shielding electrode (190) overlapping the data line (171);
the pixel electrode (191a, 191b) includes a first sub-pixel electrode (191a) including a first extension part (196a) protruded toward the first drain electrode (175a) and a contact portion (197a) connected to one end of the first extension part (196a); and
the first extension part (196a) of the first sub-pixel electrode (191a) has a first side parallel to a first side of the shielding electrode (190), and an interval between the first sides of the first extension part (196a) and the shielding electrode (190) is less than about 4 µm.

2. The display device of claim 1, wherein:
the first extension part includes a first portion (196a1) and a second portion (196a2);
the first portion comprises the first side extending in a first direction parallel to the first side of the shielding electrode; and
the second portion extends from one end of the first portion in a second direction intersecting the first direction and is bent in the first direction to be connected to the contact portion.

3. The display device of claim 2, wherein the first portion includes a first part extending from one edge of the first sub-pixel electrode in a third direction oblique to the first direction, the first part being parallel to a portion of a side of the shielding electrode and connected to the first side, and
wherein the first portion and the second portion are connected to each other, and the first direction crosses the second direction.

4. The display device of claim 2 or 3, wherein:
the first sub-pixel electrode further includes a second extension part (196aa); and
the second extension part has a second side opposing the first side of the first extension part, the second side of the second extension part is parallel to a second side of another shielding electrode adjacent to the shielding electrode.

5. The display device of claim 4, wherein an interval between the second sides of the second extension part and the adjacent other shielding electrode is less than about 4 µm,
wherein the first extension part is connected to a first edge of the first sub-pixel electrode; and the second extension part is connected to a second edge of the first sub-pixel electrode, and
wherein the second extension part has a first part protruding from the second edge of the first sub-pixel electrode, the first part being parallel to the first direction, a second part connected to the first part and extending in the second direction, and a third part connected to the second part and comprising the second side of the second extension part.

6. The display device of claim 4 or 5, wherein:
the gate line includes a first gate electrode (124a), a second gate electrode (124b), and a third gate electrode (124c);
a first transistor (Qa) includes the first gate electrode, a first source electrode (173a), and a first drain electrode (175a);
a second transistor (Qb) includes the second gate electrode, a second source electrode (173b), and a second drain electrode (175b);
a third transistor (Qc) includes the third gate electrode, a third source electrode (173c), and a third drain electrode (175c);
the pixel electrode further includes a second sub-pixel electrode (191b);
the insulating layer includes a first contact hole (185a) disposed on the first drain electrode, a second contact hole (185b) disposed on the second drain electrode, and a third contact hole (188) disposed on the third drain electrode;
the first sub-pixel electrode is electrically connected to the first drain electrode through the first contact hole;
the second sub-pixel electrode is electrically connected to the second drain electrode through the second contact hole; and
the first contact hole, the second contact hole, and the third contact hole are disposed on the same side with respect to the gate line.

7. The display device of claim 6, further comprising a connecting member (90) electrically connecting the first reference voltage line and the third drain electrode through the third contact hole.

8. The display device of claim 7, wherein the connecting member further includes a protrusion (91) protruding towards the second extension part.

9. The display device of claim 8, wherein one side of the protrusion of the connecting member is parallel to one side of the second extension part.

10. The display device of claim 9, wherein the interval between sides of the protrusion and the second extension part facing each other is less than about 4 µm.

11. The display device of claim 9 or 10, wherein the protrusion includes a first part having a first width and a second part having a second width less than the first width.

12. The display device of any one of claims 6 to 11, further comprising a second reference voltage line (178) disposed on the gate line and the first reference voltage line,
wherein the second reference voltage line is electrically connected to the first reference voltage line, includes the third drain electrode, and is disposed on the same conductive layer as the third drain electrode, and
wherein one second reference voltage line is disposed in three adjacent pixels.

13. The display device of claim 8, wherein each of the first drain electrode, the second drain electrode, the protrusion of the data line, and a connection portion between the first extension part and the first sub-pixel electrode is cut, and
wherein the first sub-pixel electrode further includes a cutting position guide part (199) for showing a cut position at the connection portion of the first extension part and the first sub-pixel electrode.

14. The display device of claim 13, wherein the first extension part of the first sub-pixel electrode is configured to be cut when the protrusion of the data line is cut.

15. The display device of claim 1, further comprising:
a colour filter (230) disposed on the substrate;
a facing substrate (210) facing the substrate and including a light blocking member (220) and a common electrode (270); and
a liquid crystal layer (3) disposed between the substrate and the facing substrate.

## Patentansprüche

1. Anzeigevorrichtung, umfassend:
ein Substrat (110);
eine auf dem Substrat (110) angeordnete Gate-Leitung (121) zum Übertragen eines Gate-Signals;
eine von der Gate-Leitung (121) getrennte erste Referenzspannungsleitung (131) zum Übertragen einer Referenzspannung;
eine Datenleitung (171), die von der Gate-Leitung (121) und der ersten Referenzspannungsleitung (131) isoliert ist und diese kreuzt;
eine von der Datenleitung (171) getrennte erste Drain-Elektrode (175a);
eine Isolierschicht (180a), die auf der Datenleitung (171) und der ersten Drain-Elektrode (175a) angeordnet ist; und
eine auf der Isolierschicht (180a) angeordnete Pixelelektrodenschicht, wobei:
die Pixelelektrodenschicht eine Pixelelektrode (191a, 191b) und eine Abschirmelektrode (190) enthält, die die Datenleitung (171) überlappen;
die Pixelelektrode (191a, 191b) eine erste Subpixelelektrode (191a) mit einem ersten Verlängerungsteil (196a), der in Richtung der ersten Drain-Elektrode (175a) vorsteht, und einen Kontaktabschnitt (197a) enthält, der mit einem Ende des ersten Verlängerungsteils (196a) verbunden ist; und
der erste Verlängerungsteil (196a) der ersten Subpixelelektrode (191a) eine erste Seite parallel zu einer ersten Seite der Abschirmelektrode (190) aufweist, und ein Intervall zwischen den ersten Seiten des ersten Verlängerungsteils (196a) und der Abschirmelektrode (190) weniger als etwa 4 µm beträgt.

2. Anzeigevorrichtung nach Anspruch 1, wobei:
der erste Verlängerungsteil einen ersten Abschnitt (196a1) und einen zweiten Abschnitt (196a2) umfasst;
der erste Abschnitt die erste Seite umfasst, die sich in einer ersten Richtung parallel zu der ersten Seite der Abschirmelektrode erstreckt; und
der zweite Abschnitt sich von einem Ende des ersten Abschnitts in einer zweiten Richtung erstreckt, die die erste Richtung kreuzt, und in der ersten Richtung gebogen ist, um mit dem Kontaktabschnitt verbunden zu werden.

3. Anzeigevorrichtung nach Anspruch 2, wobei der erste Abschnitt einen ersten Teil enthält, der sich von einer Kante der ersten Subpixelelektrode in einer dritten Richtung schräg zur ersten Richtung erstreckt, wobei der erste Teil parallel zu einem Abschnitt einer Seite der Abschirmelektrode verläuft und mit der ersten Seite verbunden ist, und
wobei der erste Abschnitt und der zweite Abschnitt miteinander verbunden sind und die erste Richtung die zweite Richtung kreuzt.

4. Anzeigevorrichtung nach Anspruch 2 oder 3, wobei:
die erste Subpixelelektrode ferner einen zweiten Verlängerungsteil (196aa) enthält; und
der zweite Verlängerungsteil eine zweite Seite aufweist, die der ersten Seite des ersten Verlängerungsteils gegenüberliegt, wobei die zweite Seite des zweiten Verlängerungsteils parallel zu einer zweiten Seite einer anderen Abschirmelektrode verläuft, die der Abschirmelektrode benachbart ist.

5. Anzeigevorrichtung nach Anspruch 4, wobei ein Intervall zwischen den zweiten Seiten des zweiten Verlängerungsteils und der benachbarten anderen Abschirmelektrode weniger als etwa 4 µm beträgt,
wobei der erste Verlängerungsteil mit einer ersten Kante der ersten Subpixelelektrode verbunden ist; und der zweite Verlängerungsteil mit einer zweiten Kante der ersten Subpixelelektrode verbunden ist, und
wobei der zweite Verlängerungsteil einen ersten Teil, der von der zweiten Kante der ersten Subpixelelektrode vorsteht, wobei der erste Teil parallel zu der ersten Richtung ist, einen zweiten Teil, der mit dem ersten Teil verbunden ist und sich in die zweite Richtung erstreckt, und einen dritten Teil aufweist, der mit dem zweiten Teil verbunden ist und die zweite Seite des zweiten Verlängerungsteils umfasst.

6. Anzeigevorrichtung nach Anspruch 4 oder 5, wobei:
die Gate-Leitung eine erste Gate-Elektrode (124a), eine zweite Gate-Elektrode (124b) und eine dritte Gate-Elektrode (124c) enthält;
ein erster Transistor (Qa) die erste Gate-Elektrode, eine erste Source-Elektrode (173a) und eine erste Drain-Elektrode (175a) enthält;
ein zweiter Transistor (Qb) die zweite Gate-Elektrode, eine zweite Source-Elektrode (173b) und eine zweite Drain-Elektrode (175b) enthält;
ein dritter Transistor (Qc) die dritte Gate-Elektrode, eine dritte Source-Elektrode (173c) und eine dritte Drain-Elektrode (175c) enthält;
die Pixelelektrode ferner eine zweite Subpixelelektrode (191b) enthält;
die Isolierschicht ein erstes Kontaktloch (185a), das an der ersten Drain-Elektrode angeordnet ist, ein zweites Kontaktloch (185b), das an der zweiten Drain-Elektrode angeordnet ist, und ein drittes Kontaktloch (188), das an der dritten Drain-Elektrode angeordnet ist, enthält;
die erste Subpixelelektrode durch das erste Kontaktloch elektrisch mit der ersten Drain-Elektrode verbunden ist;
die zweite Subpixelelektrode durch das zweite Kontaktloch elektrisch mit der zweiten Drain-Elektrode verbunden ist; und
das erste Kontaktloch, das zweite Kontaktloch und das dritte Kontaktloch in Bezug auf die Gate-Leitung auf derselben Seite angeordnet sind.

7. Anzeigevorrichtung nach Anspruch 6, ferner umfassend ein Verbindungselement (90), das die erste Referenzspannungsleitung und die dritte Drain-Elektrode durch das dritte Kontaktloch elektrisch verbindet.

8. Anzeigevorrichtung nach Anspruch 7, wobei das Verbindungselement ferner einen Vorsprung (91) aufweist, der in Richtung des zweiten Verlängerungsteils vorsteht.

9. Anzeigevorrichtung nach Anspruch 8, wobei eine Seite des Vorsprungs des Verbindungselements parallel zu einer Seite des zweiten Verlängerungsteils ist.

10. Anzeigevorrichtung nach Anspruch 9, wobei das Intervall zwischen den einander zugewandten Seiten des Vorsprungs und des zweiten Verlängerungsteils weniger als etwa 4 µm beträgt.

11. Anzeigevorrichtung nach Anspruch 9 oder 10, wobei der Vorsprung einen ersten Teil mit einer ersten Breite und einen zweiten Teil mit einer zweiten Breite, die geringer als die erste Breite ist, aufweist.

12. Anzeigevorrichtung nach einem der Ansprüche 6 bis 11, ferner umfassend eine zweite Referenzspannungsleitung (178), die auf der Gate-Leitung und der ersten Referenzspannungsleitung angeordnet ist,
wobei die zweite Referenzspannungsleitung elektrisch mit der ersten Referenzspannungsleitung verbunden ist, die dritte Drain-Elektrode enthält und auf derselben leitenden Schicht wie die dritte Drain-Elektrode angeordnet ist, und
wobei eine zweite Referenzspannungsleitung in drei benachbarten Pixeln angeordnet ist.

13. Anzeigevorrichtung nach Anspruch 8, wobei jede der ersten Drain-Elektrode, der zweiten Drain-Elektrode, des Vorsprungs der Datenleitung und eines Verbindungsabschnitts zwischen dem ersten Verlängerungsteil und der ersten Subpixelelektrode geschnitten ist, und
wobei die erste Subpixelelektrode ferner ein Schnittpositionsführungsteil (199) zum Anzeigen einer Schnittposition am Verbindungsabschnitt des ersten Verlängerungsteils und der ersten Subpixelelektrode enthält.

14. Anzeigevorrichtung nach Anspruch 13, wobei der erste Verlängerungsteil der ersten Subpixelelektrode so konfiguriert ist, dass er geschnitten wird, wenn der Vorsprung der Datenleitung geschnitten wird.

15. Anzeigevorrichtung nach Anspruch 1, ferner umfassend:
einen Farbfilter (230), der auf dem Substrat angeordnet ist;
ein zugewandtes Substrat (210), das dem Substrat zugewandt ist und ein lichtblockierendes Element (220) und eine gemeinsame Elektrode (270) enthält; und
eine Flüssigkristallschicht (3), die zwischen dem Substrat und dem zugewandten Substrat angeordnet ist.

## Revendications

1. Dispositif d'affichage comprenant :
un substrat (110) ;
une ligne de grille (121) disposée sur le substrat (110) pour transmettre un signal de grille ;
une première ligne de tension de référence (131) séparée de la ligne de grille (121) pour transmettre une tension de référence ;
une ligne de données (171) isolée de et croisant la ligne de grille (121) et la première ligne de tension de référence (131) ;
une première électrode de drain (175a) séparée de la ligne de données (171) ;
une couche isolante (180a) disposée sur la ligne de données (171) et la première électrode de drain (175a) ; et
une couche d'électrode de pixel disposée sur la couche isolante (180a), dans lequel :
la couche d'électrode de pixel comporte une électrode de pixel (191a, 191b) et une électrode de protection (190) chevauchant la ligne de données (171) ;
l'électrode de pixel (191a, 191b) comporte une première électrode de sous-pixel (191a) comportant une première partie d'extension (196a) en saillie en direction de la première électrode de drain (175a) et une portion de contact (197a) reliée à une extrémité de la première partie d'extension (196a) ; et
la première partie d'extension (196a) de la première électrode de sous-pixel (191a) présente un premier côté parallèle à un premier côté de l'électrode de protection (190), et un intervalle entre les premiers côtés de la première partie d'extension (196a) et l'électrode de protection (190) est inférieur à environ 4 µm.

2. Dispositif d'affichage selon la revendication 1, dans lequel :
la première partie d'extension comporte une première portion (196a1) et une deuxième portion (196a2) ;
la première portion comprend le premier côté s'étendant dans une première direction parallèle au premier côté de l'électrode de protection ; et
la deuxième portion s'étend à partir d'une extrémité de la première portion dans une deuxième direction coupant la première direction et est fléchie dans la première direction pour être reliée à la portion de contact.

3. Dispositif d'affichage selon la revendication 2, dans lequel la première portion comporte une première partie s'étendant à partir d'un bord de la première électrode de sous-pixel dans une troisième direction oblique par rapport à la première direction, la première partie étant parallèle à une portion d'un côté de l'électrode de protection et reliée au premier côté, et
dans lequel la première portion et la deuxième portion sont reliées l'une à l'autre, et la première direction croise la deuxième direction.

4. Dispositif d'affichage selon la revendication 2 ou 3, dans lequel :
la première électrode de sous-pixel comporte en outre une deuxième partie d'extension (196aa) ; et
la deuxième partie d'extension présente un deuxième côté opposé au premier côté de la première partie d'extension, le deuxième côté de la deuxième partie d'extension est parallèle à un deuxième côté d'une autre électrode de protection adjacente à l'électrode de protection.

5. Dispositif d'affichage selon la revendication 4, dans lequel un intervalle entre les deuxièmes côtés de la deuxième partie d'extension et l'autre électrode de protection adjacente est inférieur à environ 4 µm,
dans lequel la première partie d'extension est reliée à un premier bord de la première électrode de sous-pixel ; et la deuxième partie d'extension est reliée à un deuxième bord de la première électrode de sous-pixel, et
dans lequel la deuxième partie d'extension présente une première partie faisant saillie du deuxième bord de la première électrode de sous-pixel, la première partie étant parallèle à la première direction, une deuxième partie reliée à la première partie et s'étendant dans la deuxième direction, et une troisième partie reliée à la deuxième partie et comprenant le deuxième côté de la deuxième partie d'extension.

6. Dispositif d'affichage selon la revendication 4 ou 5, dans lequel :
la ligne de grille comporte une première électrode de grille (124a), une deuxième électrode de grille (124b), et une troisième électrode de grille (124ac) ;
un premier transistor (Qa) comporte la première électrode de grille, une première électrode de source (173a), et une première électrode de drain (175a) ;
un deuxième transistor (Qb) comporte la deuxième électrode de grille, une deuxième électrode de source (173b), et une deuxième électrode de drain (175b) ;
un troisième transistor (Qc) comporte la troisième électrode de grille, une troisième électrode de source (173c), et une troisième électrode de drain (175c) ;
l'électrode de pixel comporte en outre une deuxième électrode de sous-pixel (191b) ;
la couche isolante comporte un premier trou de contact (185a) disposé sur la première électrode de drain, un deuxième trou de contact (185b) disposé sur la deuxième électrode de drain, et un troisième trou de contact (188) disposé sur la troisième électrode de drain ;
la première électrode de sous-pixel est reliée électriquement à la première électrode de drain par l'intermédiaire du premier trou de contact ;
la deuxième électrode de sous-pixel est reliée électriquement à la deuxième électrode de drain par l'intermédiaire du deuxième trou de contact ; et
le premier trou de contact, le deuxième trou de contact, et le troisième trou de contact sont disposés du même côté par rapport à la ligne de grille.

7. Dispositif d'affichage selon la revendication 6, comprenant en outre un élément de liaison (90) reliant électriquement la première ligne de tension de référence et la troisième électrode de drain par l'intermédiaire du troisième trou de contact.

8. Dispositif d'affichage selon la revendication 7, dans lequel l'élément de liaison comporte en outre une partie saillante (91) faisant saillie en direction de la deuxième partie d'extension.

9. Dispositif d'affichage selon la revendication 8, dans lequel un côté de la partie saillante de l'élément de liaison est parallèle à un côté de la deuxième partie d'extension.

10. Dispositif d'affichage selon la revendication 9, dans lequel l'intervalle entre les côtés de la partie saillante et de la deuxième partie d'extension tournées l'une vers l'autre est inférieur à environ 4 µm.

11. Dispositif d'affichage selon la revendication 9 ou 10, dans lequel la partie saillante comporte une première partie présentant une première largeur et une deuxième partie présentant une deuxième largeur inférieure à la première largeur.

12. Dispositif d'affichage selon l'une quelconque des revendications 6 à 11, comprenant en outre une deuxième ligne de tension de référence (178) disposée sur la ligne de grille et la première ligne de tension de référence,
dans lequel la deuxième ligne de tension de référence est reliée électriquement à la première ligne de tension de référence, comporte la troisième électrode de drain, et est disposée sur la même couche conductrice que la troisième électrode de drain, et
dans lequel une deuxième ligne de tension de référence est disposée dans trois pixels adjacents.

13. Dispositif d'affichage selon la revendication 8, dans lequel chacune de la première électrode de drain, la deuxième électrode de drain, la partie saillante de la ligne de données, et une portion de liaison entre la première partie d'extension et la première électrode de sous-pixel est découpée, et
dans lequel la première électrode de sous-pixel comporte en outre une partie de guidage de position de découpe (199) pour montrer une position découpée au niveau de la portion de liaison de la première partie d'extension et de la première électrode de sous-pixel.

14. Dispositif d'affichage selon la revendication 13, dans lequel la première partie d'extension de la première électrode de sous-pixel est configurée pour être découpée lorsque la partie saillante de la ligne de données est découpée.

15. Dispositif d'affichage selon la revendication 1, comprenant en outre :
un filtre de couleur (230) disposé sur le substrat ;
un substrat de revêtement (210) revêtant le substrat et comportant un élément de blocage de lumière (220) et une électrode commune (270) ; et
un couche de cristaux liquides (3) disposée entre le substrat et le substrat de revêtement.
